Europäisches Patentamt

European Patent Office

Office européen des brevets

(19)

(11) Veröffentlichungsnummer: **0 388 591**
**A1**

(12) **EUROPÄISCHE PATENTANMELDUNG**

(21) Anmeldenummer: **90101286.4**

(51) Int. Cl.5: **C09D 11/00, B41M 1/34**

(22) Anmeldetag: **23.01.90**

(30) Priorität: **23.03.89 DE 3909628**

(43) Veröffentlichungstag der Anmeldung:
**26.09.90 Patentblatt 90/39**

(84) Benannte Vertragsstaaten:
**AT DE FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Nowitzki, Bernd, Dr.**
**Kampstrasse 98**
**D-4370 Marl(DE)**
Erfinder: **Sandkühler, Annette**
**Karl-Marx-Strasse 3**
**D-4370 Marl(DE)**
Erfinder: **Duismann, Werner, Dr.**
**Am Kiebeck 2**
**D-4270 Dorsten 21(DE)**
Erfinder: **Müller, Karin**
**Stargarder Strasse 30**
**D-4370 Marl(DE)**
Erfinder: **Rennwanz, Peter**
**Johann-Grüter Strasse 15**
**D-4358 Haltern(DE)**

(54) **Verfahren zur Kennzeichnung von saugfähigem Material mit einer thermisch stabilen Farbe.**

(57)

2.1 Die Kennzeichnung von saugfähigem Material, insbesondere von Stückgütern aus Keramik, soll sofort sehr gut lesbar und auch noch nach einer thermischen Behandlung bei Temperaturen oberhalb von 400 °C lesbar sein.

2.2 Die Kennzeichnung von saugfähigem Material erfolgt durch Aufbringen einer Kobaltsalzlösung, der Wasserstoffperoxid zugesetzt ist, woran sich eine thermische Nachbehandlung oberhalb einer Temperatur von 400 °C zur Stabilisierung der Kennzeichnung anschließt.

2.3 Kennzeichnung von saugfähigem Material, insbesondere von Stückgütern aus Keramik, mit einer thermisch stabilen Farbe.

Xerox Copy Centre

## Verfahren zur Kennzeichnung von saugfähigem Material mit einer thermisch stabilen Farbe

Die Erfindung betrifft ein Verfahren zur Kennzeichnung von saugfähigem Material mit einer thermisch stabilen Farbe, wobei man eine Kobaltsalzlösung auf das saugfähige Material aufbringt und die so aufgebrachte Kennzeichnung durch eine thermische Nachbehandlung bei Temperaturen von größer als 400 °C stabilisiert.

Des weiteren betrifft die Erfindung die Verwendung der Kobaltsalzlösung als thermisch stabile Farbe zur Kennzeichnung von saugfähigem Material.

Die Kennzeichnung von Materialien mit saugfähigem Untergrund ist bei der industriellen Fertigung von allgemeiner Bedeutung.

Insbesondere die Kennzeichnung von Stückgütern während des Produktionsablaufes ist vielfach Stand der Technik. Sie hat für den Hersteller u. a. den Vorteil der besseren Fertigungskontrolle gegenüber einer Beschriftung der Endprodukte. Aber auch der Anwender des Produktes hat Vorteile durch eine dauerhafte Kennzeichnung, z. B. beim Zuordnen von Einzelstücken zu Lieferanten und Feststellen von Lieferzeiten.

Für die Beschriftung größerer Flächen mit saugfähigem Untergrund, z. B. Papier, Holz, Keramik, werden in der Technik häufig Tintenstrahldrukker eingesetzt. Hierfür und für technisch gleichartige Systeme steht eine große Anzahl von geeigneten Farben unterschiedlicher Hersteller zur Verfügung. Dabei handelt es sich um lösliche organische Farbstoffe, die thermisch ungenügend stabil sind.

Suspensionen von Farbpigmenten können bei dieser Kennzeichnungstechnik wegen der verwendeten Geräte nicht eingesetzt werden.

Es ist bekannt, gemäß JP-OS Sho 60/49073 und JP-AS 75/6802 Kobaltthiocyanat-Lösungen als blaue, mit Wasser zu entfernende Tinten zu verwenden. JP-OS Sho 63/30572 offenbart die Verwendung von Kupfer oder Kobalt-Chelat-Komplexen als Tinten.

Die Tinten gemäß diesem Stand der Technik sind aber bei einer thermischen Nachbehandlung des gekennzeichneten Materials mit demselben wenig verträglich.

Die nicht vorveröffentlichte deutsche Patentanmeldung P 39 02 225 beschreibt ein Verfahren zur Kennzeichnung von saugfähigem Material mit einer thermisch stabilen Farbe, das dadurch gekennzeichnet ist, daß man eine Kobaltsalzlösung auf das saugfähige Material aufbringt und die so aufgebrachte Kennzeichnung durch eine thermische Nachbehandlung bei Temperaturen von größer als 400 °C stabilisiert.

Allerdings ist die Kobaltsalzlösung gemäß der deutschen Patentanmeldung P 39 02 225 sofort nach dem Aufbringen auf das saugfähige Material wenig gut lesbar. Dieses gilt insbesondere für die Kennzeichnung von nicht weißem, saugfähigem Material.

Der Erfindung liegt daher die Aufgabe zugrunde, ein Verfahren zur Kennzeichnung von saugfähigem Material mit einer thermisch stabilen Farbe zu entwickeln, die nach dem Aufbringen zur Verfolgung des Produktes bzw. Zwischenproduktes sofort sehr gut lesbar und auch noch nach einer thermischen Behandlung bei Temperaturen von größer als 400 °C lesbar ist.

Es wurde nun überraschenderweise gefunden, daß man durch Aufbringen einer Kobaltsalzlösung, der Wasserstoffperoxid zugesetzt ist, auf das saugfähige Material eine sofort ausgezeichnet lesbare Kennzeichnung von tiefdunkler Farbe mit ausgezeichneter Farbdichte erhält, die nach der thermischen Behandlung bei Temperaturen von größer als 400 °C schwarz wird. Es entsteht das bekannte "Kobaltschwarz".

Gegenstand der vorliegenden Erfindung ist daher ein Verfahren zur Kennzeichnung von saugfähigem Material mit einer thermisch stabilen Farbe, wobei man eine Kobaltsalzlösung auf das saugfähige Material aufbringt und die so aufgebrachte Kennzeichnung durch eine thermische Nachbehandlung bei Temperaturen von größer als 400 °C stabilisiert, das dadurch gekennzeichnet ist, daß man der Kobaltsalzlösung Wasserstoffperoxid zusetzt.

Des weiteren ist Gegenstand der vorliegenden Erfindung die Verwendung der Kobaltsalzlösung nach den Ansprüchen 1 bis 5 als thermisch stabile Farbe zur Kennzeichnung von saugfähigem Material.

Vorzugsweise setzt man der Kobaltsalzlösung 0,01 bis 20 Gew.-% Wasserstoffperoxid, bezogen auf die vorgelegte Kobaltsalzlösung, zu.

Das Wasserstoffperoxid kann z. B. als wäßrige Wasserstoffperoxidlösung zugesetzt werden, wobei die Konzentration an Wasserstoffperoxid z. B. 25 bis 30 Gew.-%, bezogen auf die gesamte Lösung, betragen kann.

Als Kobaltsalz wird vorzugsweise Kobaltacetat eingesetzt.

Je nach Färbung des Untergrundes kann es empfehlenswert sein, zusätzlich ein Kupfersalz, vorzugsweise Kupferacetat, beizufügen, d. h. die Kobaltsalzlösung enthält zusätzlich Kupfersalz. Hierdurch wird auch die Stabilität der Farbe gegen Säureeinwirkung erhöht.

Außerdem kann es je nach Beschaffenheit des Untergrundes wünschenswert sein, den pH-Wert der erfindungsgemäß eingesetzten Kobaltsalzlösung gezielt einzustellen, was durch Zugabe von Salzen, z. B. durch Zugabe von Ammoniumcarbonat oder Ammoniumacetat, erfolgen kann.

Zur Herstellung der erfindungsgemäß eingesetzten Kobaltsalzlösung sind verschiedene Lösungsmittel, wie z. B. Wasser, Essigsäure, Methanol, Ethanol und Aceton geeignet. Vorzugsweise bringt man eine wäßrige Kobaltsalzlösung auf das saugfähige Material auf.

In Abhängigkeit von der Saugfähigkeit des Materials kann es nützlich sein, die Viskosität der Lösung durch einen geeigneten Stoff zu erhöhen. Man bringt also die erfindungsgemäß eingesetzte Kobaltsalzlösung, die zusätzlich einen Stoff, vorzugsweise Methylcellulose, zur Viskositätserhöhung der Lösung enthält, auf das saugfähige Material auf.

Die erfindungsgemäß eingesetzte Kobaltsalzlösung kann mit Hilfe eines jeglichen hierzu geeigneten Gerätes, wie z. B. eines Rollensignierers, einer Siebdruckmaschine, vorzugsweise mit Hilfe eines Tintenstrahldruckers, auf das saugfähige Material aufgebracht werden.

Saugfähige Materialien, die mit Hilfe des erfindungsgemäßen Verfahrens gekennzeichnet werden können, sind z. B. Sintermetalle, Steine, Tonerzeugnisse und Keramik.

Das erfindungsgemäße Verfahren ist insbesondere geeignet, um ein keramisches Material mit einer thermisch stabilen Farbe zu kennzeichnen. Vorzugsweise läßt sich das erfindungsgemäße Verfahren zur Kennzeichnung von Stückgütern aus saugfähigem Material mit einer thermisch stabilen Farbe anwenden.

Die thermische Nachbehandlung der erfindungsgemäß aufgebrachten Kennzeichnung erfolgt z. B. durch Brennen oder Calcinieren oberhalb einer Temperatur von 400 °C, wobei die erfindungsgemäß eingesetzten Kobaltsalze und Kupfersalze in ihre entsprechenden Oxide umgewandelt werden.

Die Erfindung wird durch das folgende Beispiel näher erläutert:

## Beispiel

26,5 g Kobalt-(II)-acetat werden in 63,1 ml Wasser gelöst und hierzu 2,4 g einer 30 Gew.-%igen Wasserstoffperoxidlösung unter Rühren zugesetzt. Diese Lösung wird in einem handelsüblichen "ink-jet"-Gerät (Tintenstrahldrucker) eingesetzt.

Gekennzeichnet werden Wabenkörper, die überwiegend aus Titandioxid bestehen und als Katalysatoren zur Entfernung von Stickoxiden aus Rauchgasen eingesetzt werden, im laufenden Fertigungsprozeß, und zwar nach der Trocknung vor der Brennstufe.

Es wird sofort eine ausgezeichnet lesbare, tiefdunkle Beschriftung erhalten.

Bei den nachfolgenden Verfahrensschritten der Fertigung einschließlich des Brennens oberhalb 450 °C bleibt die Kennzeichnung erhalten.

Da die Farbe in die Matrix eingezogen ist, bleibt die Kennzeichnung auch während des Betriebes unter erodierenden Bedingungen, d. h. Abtragen der Oberfläche, bestehen.

## Ansprüche

1. Verfahren zur Kennzeichnung von saugfähigem Material mit einer thermisch stabilen Farbe, wobei man eine Kobaltsalzlösung auf das saugfähige Material aufbringt und die so aufgebrachte Kennzeichnung durch eine thermische Nachbehandlung bei Temperaturen von größer als 400 °C stabilisiert,
dadurch gekennzeichnet,
daß man der Kobaltsalzlösung Wasserstoffperoxid zusetzt.

2. Verfahren nach Anspruch 1,
dadurch gekennzeichnet,
daß man der Kobaltsalzlösung 0,01 bis 20 Gew.-% Wasserstoffperoxid, bezogen auf die vorgelegte Kobaltsalzlösung, zusetzt.

3. Verfahren nach den Ansprüchen 1 und 2,
dadurch gekennzeichnet,
daß man eine Kobaltsalzlösung, die zusätzlich Kupfersalz enthält, auf das saugfähige Material aufbringt.

4. Verfahren nach den Ansprüchen 1 bis 3,
dadurch gekennzeichnet,
daß man als Kobaltsalz Kobaltacetat einsetzt.

5. Verfahren nach den Ansprüchen 1 bis 4,
dadurch gekennzeichnet,
daß man als Kupfersalz Kupferacetat einsetzt.

6. Verfahren nach den Ansprüchen 1 bis 5,
dadurch gekennzeichnet,
daß man die Kobaltsalzlösung mit Hilfe eines Tintenstrahldruckers auf das saugfähige Material aufbringt.

7. Verfahren nach den Ansprüchen 1 bis 6,
dadurch gekennzeichnet,
daß man die Kobaltsalzlösung auf ein keramisches Material aufbringt.

8. Verfahren nach den Ansprüchen 1 bis 7,
dadurch gekennzeichnet,
daß man die Kobaltsalzlösung auf Stückgüter aus saugfähigem Material aufbringt.

9. Verwendung der Kobaltsalzlösung nach den Ansprüchen 1 bis 5 als thermisch stabile Farbe zur Kennzeichnung von saugfähigem Material.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DATABASE WPIL, Nr. 87-345630, Derwent Publications Ltd, London, GB; & JP-A-62 250 081 (TOYO INK. MFG K.K.) 30-10-1987 * Zusammenfassung * | 1 | C 09 D 11/00 B 41 M 1/34 |
| A | EP-A-0 328 122 (CANON K.K.) * Anspruch 1 * | 1 | |

|  |
|---|
| **RECHERCHIERTE SACHGEBIETE (Int. Cl.5)** |
| C 09 D B 41 M |

Der vorliegende Recherchenbericht wurde für alle Patentansprüche erstellt

| Recherchenort | Abschlußdatum der Recherche | Prüfer |
|---|---|---|
| DEN HAAG | 13-06-1990 | BUSCAGLIONE Y. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)